# EUROPÄISCHE PATENTANMELDUNG

(11) **EP 1 479 547 A1**
(43) Veröffentlichungstag der Anmeldung: **24.11.2004**
(21) Anmeldenummer: 04011744.2
(22) Anmeldetag: 18.05.2004
(51) Int. Cl.: B60H 1/00

(54) **Gehäuse, insbesondere Luftführungsgehäuse, und Verfahren zur Herstellung eines solchen**

(30) Priorität: 20.05.2003 DE 10323045
(71) Anmelder: Behr GmbH & Co. KG, 70469 Stuttgart (DE)
(72) Erfinder: Klingler, Dietrich, 73540 Heubach (DE)
(74) Vertreter: Grauel, Andreas, Dr.

(57) **Zusammenfassung**

Die Erfindung betrifft ein Gehäuse (1), insbesondere ein Luftführungsgehäuse für ein Kraftfahrzeug, mit einer Grundschicht (3) und einer Oberflächenschicht (2), wobei die Oberflächenschicht (2) aus einem geschäumten Kunststoff besteht und die beiden Schichten (2, 3) des Gehäuses (1) als Verbund in einem 2-Komponenten-Spritzguss-Verfahren hergestellt sind, sowie ein Verfahren zur Herstellung eines solchen Gehäuses (1).

## Beschreibung

Die Erfindung betrifft ein Gehäuse, insbesondere ein Luftführungsgehäuse für ein Kraftfahrzeug, gemäß dem Oberbegriff des Anspruchs 1 sowie ein Verfahren zur Herstellung eines solchen.

Herkömmliche, spritzgegossene Kunststoff-Luftführungsgehäuse werden zur Geräuschreduzierung mit Auskleidungen oder Verkleidungen versehen, welche in der Regel aus Schaumstoff oder einem anderen geräuschdämmenden Werkstoff versehen, der an der Gehäusewand angebracht wird. Dies erfolgt üblicherweise mittels Kleben oder Tackern. Hierbei kommt es bei immer größer werdenden Luftdurchsätzen zu Druck- und somit Energieverlusten. Ein derartiges Gehäuse lässt daher noch Wünsche offen, insbesondere auch in Hinblick auf die Herstellung desselben.

Es ist Aufgabe der Erfindung, ein verbesserte Gehäuse zur Verfügung zu stellen.

Diese Aufgabe wird gelöst durch ein Gehäuse mit den Merkmalen des Anspruchs 1. Vorteilhafte Ausgestaltungen sind Gegenstand der Unteransprüche.

Erfindungsgemäß ist ein Gehäuse, insbesondere ein luftführendes Gehäuse eines Belüftungssystems, vorzugsweise einer Klimaanlage eines Kraftfahrzeugs, vorgesehen, bei dem ein Verbund von mindestens zwei Schichten in einem 2-Komponenten-Spritzguss-Verfahren hergestellt wurde. Die geschäumte Oberflächenschicht weist hierbei eine geschlossene Oberfläche auf. Das 2-Komponenten-Spritzguss-Verfahren bietet den Vorteil, dass das Gehäuse in einem Arbeitsgang hergestellt werden kann und kein nachträgliches Auskleiden oder Verkleiden des Gehäuses erforderlich ist. Die geschäumte Oberflächenschicht wirkt unter anderem geräuschdämmend.

Bevorzugt ist die geschäumte Oberflächenschicht strukturiert ausgebildet. Insbesondere weist die Oberflächenschicht sich in Luftströmungsrichtung erstreckende Erhöhungen auf, wodurch der Strömungswiderstand gering gehalten und der Druckabfall beim Durchströmen minimiert werden kann.

Vorzugsweise weist die Oberflächenschicht Erhöhungen in Form von Pyramiden mit einer drachenartigen Grundfläche auf, wobei insbesondere die langen Diagonalen der Pyramiden sich im Wesentlichen in Luftströmungsrichtung erstrecken.

Bevorzugt bestehen die Grundschicht und die Oberflächenschicht aus unterschiedlichen Materialien, wobei auch unterschiedliche Füllstoffe verwendet werden können.

Die Grundschicht und/oder die Oberflächenschicht besteht bevorzugt aus einem thermoplastischen Elastomer, Polypropylen (PP), hochdichtem Polyethylen (HDPE), Polystyrol (PS), Polycarbonate (PC), Polyamid (PA), Polycarbonate/Acrylnitril-Butadien-Styrol-Copolymere (PC/ABS), Hochtemperaturkunststoffe, wie Polysulfone oder Polyetherimide, flüssigkristalline Polymere (LCP) sind geeignet. Dabei können auch Füllstoffen, z.B. Talkum, enthalten sein.

Im Folgenden wird die Erfindung anhand zweier Ausführungsbeispiele unter Bezugnahme auf die Zeichnung im Einzelnen erläutert. In der Zeichnung zeigen:
- Fig. 1: eine perspektivische Draufsicht auf eine Innenfläche eines Luftführungsgehäuses einer Klimaanlage,
- Fig. 2: einen Schnitt durch das Gehäuse von Fig. 1 in Richtung des Pfeiles II von Fig. 3,
- Fig. 3: einen Schnitt durch das Gehäuse von Fig. 1 in Richtung der längeren Diagonalen der drachenförmigen Pyramide,
- Fig. 4: einen Schnitt durch ein zweites Ausführungsbeispiel in Richtung des Pfeiles IV von Fig. 5,
- Fig. 5: eine Draufsicht auf das Gehäuse von Fig. 4, und
- Fig. 6: einen Schnitt durch das zweite Ausführungsbeispiel in Richtung des Pfeiles VI von Fig. 5.

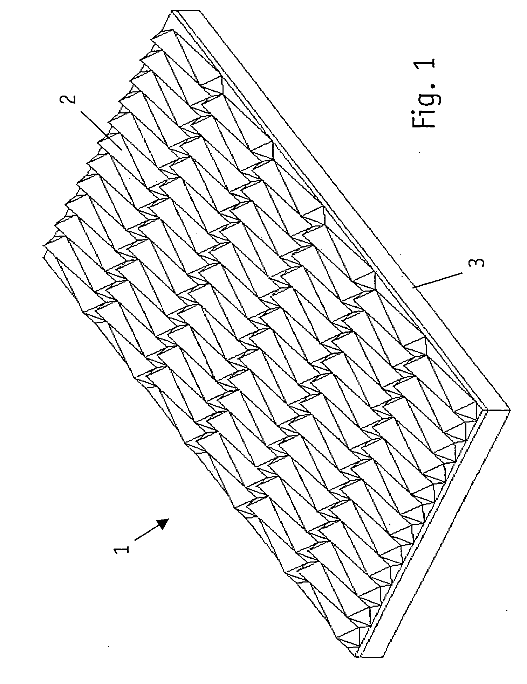

Eine erfindungsgemäße Luftführungsgehäuse, im Folgenden als Gehäuse 1 bezeichnet, weist auf seiner in Fig. 1 von oben gesehen dargestellten Innenseite, d.h. der mit der zu leitenden Luft in Berührung stehenden Oberfläche, eine mit drachenartig geformten Pyramiden versehene Oberflächenschicht 2 auf. Die kurzen Kanten der Pyramide sind vorliegend gleich lang, das heißt, die Höhe H entspricht der halben Länge der kurzen Diagonalen, welche auch des kurzen Teiles I der langen Diagonalen entspricht, wobei der lange Teil mit L bezeichnet wird. Vorliegend ist das Verhältnis L:I 5:1, das Verhältnis H:I ist 1:1, jedoch sind andere Verhältnisse möglich. Auch innerhalb eines Bauteiles können sich die Verhältnisse in Abhängigkeit der in den jeweiligen Bereichen herrschenden Strömungsgeschwindigkeiten unterscheiden.

Die Oberflächenschicht 2 besteht gemäß dem vorliegenden Ausführungsbeispiel aus einem gasgefüllten thermoplastischen Elastomer (TPE), vorliegend Polypropylen (PP) mit 20% Talkum, welches eine geschlossene Oberfläche, aber einen porösen Kern aufweist.

Unterhalb und fest verbunden mit der Oberflächenschicht 2 ist ein Gehäusegrundkörper angeordnet, im Folgenden als Grundschicht 3 bezeichnet. Diese Grundschicht 3 besteht gemäß dem vorliegenden Ausführungsbeispiel aus Polyethylen (PE).

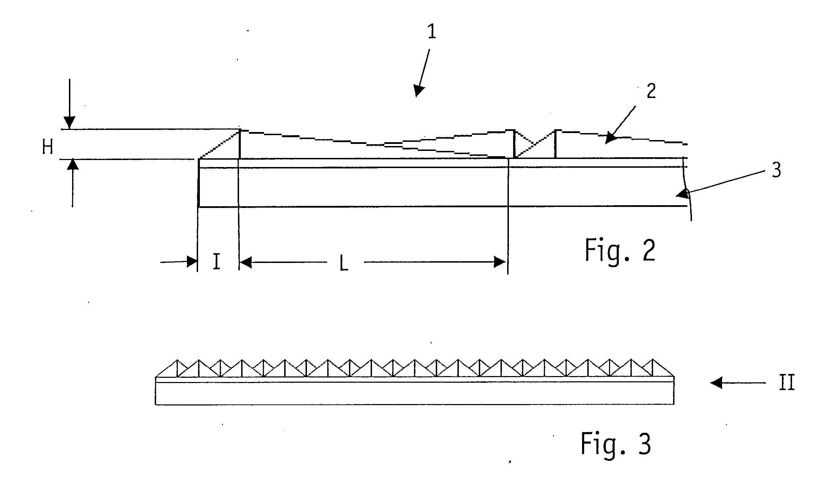

Die Dicke der Grundschicht 3 ist abhängig von den Stabilitätserfordernissen, da hauptsächlich sie die tragende Funktion beim Verbund übernimmt. In Fig. 2 entspricht die Dicke etwa der Höhe H der Pyramiden, jedoch können die Verhältnisse zwischen Bereichen, die großen Kräften ausgesetzt sind, und Bereichen, die nur minimale Kräfte aufnehmen müssen, stark schwanken. Beispielsweise kann die Grundschicht 3 in stark beanspruchten Bereichen zehnmal so groß wie die Höhe H der Pyramiden sein, in extrem wenig beanspruchten Bereichen sogar filmartig im Verhältnis zur Oberflächenschicht 2 ausgebildet sein, oder im Extremfall, wenn die Eigenstabilität der Oberflächenschicht 2 ausreicht, sogar in diesem Bereich ganz entfallen.

Die Herstellung des Verbundes erfolgt in einem 2-Komponenten-Spritzguss-Verfahren. Vorliegend wird das sogenannte MuCell-Mikrostrukturschäumverfahren @ für die geschäumte Komponente mit einem herkömmlichen Spritzguss-Verfahren für die Grundschicht kombiniert.

Beim MuCell-Mikrostrukturschäumverfahren ® wird zuerst der Kunststoff in einem Barriereschneckensegment homogen aufgeschmolzen, anschließend wird ein in den superkritischen Zustand versetztes Gas über Gasinjektoren im Massezylinder zugegeben, das Gas wird in der Schneckenmischzone fein in der Schmelze verteilt und gelöst, er folgt die Bildung fein dispergierter Nukleierungskeime in Folge des Druckabfalls beim beginnenden Werkzeugfüllvorgang, anschließend folgt die Zellbildung durch das Ausfallen von gelöstem Gas aus der Schmelze während des Werkzeugfüllvorganges und ein Zellwachstum durch den wirkenden Gasdruck in der Abkühlphase durch Schwindungskompensation.

Alternativ kann als schäumende Komponente die Ergocell®-Schaumeinheit mit einem konventionellen Spritzgußzylinder mit einer Drei-Zonen-Standard-Schnecke und Rückstromsperre verwendet werden. Vor dem Zylinder ist das Schaummodul angeflanscht. Es besteht aus einem Mischer, einem Einspritzbaustein und einem Rückschlagventil. Vor das Schaummodul ist noch die Verschlussdüse als Übergang zum Werkzeug angeschraubt. Auch bei diesem Verfahren wird der physikalische Effekt, dass Gase unter hohem Druck flüssig sind, sich in anderen Flüssigkeiten einmischen lassen, und bei Aufhebung/Entlastung des Druckes dieses Gemisch aufschäumt. Bei diesem Verfahren wird insbesondere CO₂ als Gas verwendet.

Herkömmliche Schäumverfahren sind ebenfalls verwendbar. Hierbei sind beim klassischen Thermoplast-Schaumspritzguss-Verfahren (TSG) im die geschäumte Oberflächenschicht 2 bildenden Ausgangsmaterial chemische Treibmittel vorgesehen, welche sich unter Wärmewirkung zersetzen und dabei gasförmige Zersetzungsprodukte abgeben, die den Schäumvorgang bewirken. Alternativ können auch physikalische Treibmittel, d.h. in der Kunststoffschmelze gelöste inerte Gase oder bei niedriger Temperatur verdampfende Flüssigkeiten verwendet werden. Die physikalischen Treibmittel werden insbesondere bei gegen Spaltprodukte chemischer Treibmittel empfindlichen Kunststoffen verwendet. Hierbei ist auch das Material der Grundschicht 3 zu berücksichtigen. Varianten sind möglich.

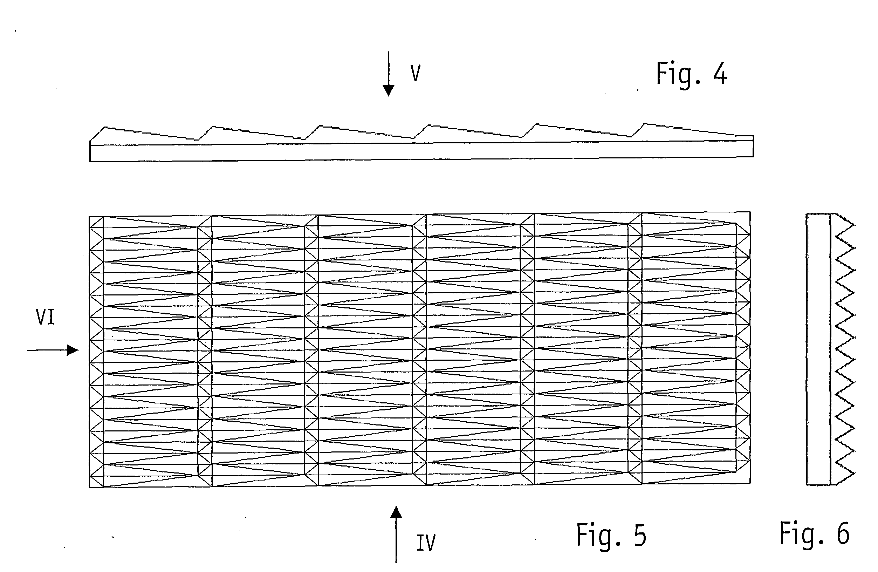

Ein zweites Ausführungsbeispiel, das in den Figuren 4 bis 6 dargestellt ist, entspricht im Wesentlichen dem ersten Ausführungsbeispiel, jedoch sind die drachenförmigen Pyramiden derart ausgestaltet, dass die gegenläufig angeordneten Pyramiden in einer Richtung überstehen und in der anderen Richtung Vertiefungen bilden.

## Patentansprüche

1. Gehäuse, insbesondere Luftführungsgehäuse für ein Kraftfahrzeug, mit einer Grundschicht (3) und einer Oberflächenschicht (2), wobei die Oberflächenschicht (2) aus einem geschäumten Kunststoff besteht, **dadurch gekennzeichnet, dass** die beiden Schichten (2, 3) des Gehäuses (1) als Verbund in einem 2-Komponenten-Spritzguss-Verfahren hergestellt sind.

2. Gehäuse nach Anspruch 1, **dadurch gekennzeichnet, dass** die Oberflächenschicht (2) strukturiert ausgebildet ist.

3. Gehäuse nach Anspruch 1 oder 2, **dadurch gekennzeichnet, dass** die Oberflächenschicht (2) sich in Luftströmungsrichtung erstreckende Erhöhungen aufweist.

4. Gehäuse nach einem der vorhergehenden Ansprüche, **dadurch gekennzeichnet, dass** die Oberflächenschicht (2) Erhöhungen in Form von drachenartig ausgebildeten Pyramiden aufweist.

5. Gehäuse nach Anspruch 4, **dadurch gekennzeichnet, dass** sich die langen Diagonalen der Pyramiden im Wesentlichen in Luftströmungsrichtung erstrecken.

6. Gehäuse nach einem der vorhergehenden Ansprüche, **dadurch gekennzeichnet, dass** die Grundschicht (3) und die Oberflächenschicht (2) aus unterschiedlichen Materialien bestehen.

7. Gehäuse nach einem der vorhergehenden Ansprüche, **dadurch gekennzeichnet, dass** die Grundschicht (3) und/oder die Oberflächenschicht (2) aus einem thermoplastischen Elastomer, Polypropylen (PP), einem hochdichten Polyethylen (HDPE), Polystyrol (PS), Polycarbonat (PC), Polyamid (PA), einem Polycarbonat/Acrylnitril-Butadien-Styrol-Copolymer (PC/ABS), einem Hochtemperaturkunststoff, einem flüssigkristallinen Polymer (LCP) besteht.

8. Verfahren zur Herstellung eines Gehäuses (1), insbesondere ein Luftführungsgehäuse für ein Kraftfahrzeug, mit einer Grundschicht (3) und einer Oberflächenschicht (2), **dadurch gekennzeichnet, dass** die beiden Schichten (2, 3) des Gehäuses (1) als Verbund in einem 2-Komponenten-Spritzguss-Verfahren hergestellt werden, wobei die Oberflächenschicht (2) in einem Schaumspritzguss-Verfahren hergestellt wird.

9. Verfahren nach Anspruch 8, **dadurch gekennzeichnet, dass** für die die Oberflächenschicht bildende Komponente zuerst der entsprechende Kunststoff aufgeschmolzen, anschließend ein in den superkritischen Zustand versetztes Gas zugegeben, das Gas fein in der Schmelze verteilt und gelöst und anschließend die Schmelze in die Form eingespritzt wird, die unter Porenbildung gefüllt wird.

10. Verfahren nach Anspruch 8 oder 9, **dadurch gekennzeichnet, dass** thermoplastische Elastomere, Polypropylen (PP), hochdichtes Polyethylen (HDPE), Polystyrol (PS), Polycarbonate (PC), Polyamid (PA), Polycarbonate/Acrylnitril-Butadien-Styrol-Copolymere (PC/ABS), Hochtemperaturkunststoffe, flüssigkristalline Polymere (LCP) verwendet werden.
